# EUROPEAN PATENT APPLICATION

(11) **EP 1 310 156 A1**
(43) Date of publication of application: **14.05.2003**
(21) Application number: 02024112.1
(22) Date of filing: 29.10.2002
(51) Int. Cl.: A01G 9/02

(54) **Flower tube with capillary effect**

(30) Priority: 30.10.2001 DK 200101597
(71) Applicant: Fix-Up A/S, 5450 Otterup (DK)
(72) Inventor: Timmermann, Poul, 5450 Otterup (DK)
(74) Representative: Olsen, Peter Vestergaard

(57) **Abstract**

A flower tube (2) whereby the soil (8) in the flower tube (2) is divided into at least two zones (12,14,16), each zone having its own physical/and or chemical properties. Hereby the possibility is achieved for creating optimum conditions of growth for plants with weak roots system that cannot ensure the plants sufficient water and nutrients when they are planted in traditional flower tubes.

In a preferred embodiment of a flower tube (2) according to the invention, the tube (2) is arranged with several zones (12,14,16), each zone consisting of soil (8) that has been compacted to different densities by which each of the zones (12,14,16) has different properties with regard to permeability for roots and with regard to water conducting ability.

## Description

Flower tube of the type that is filled with a suitable material for growing ornamental plants and placed over a traditional flower pot where the flower pot is filled with the same suitable material, in the following called soil.

It is generally known that there is a market for ornamental plants where all the branches have been removed from the stem. But only plant types that have an actual stem can have branches removed. It is also generally known to have other types of ornamental plants arranged in such a way that a certain downwards hanging of the leaves and flowers of the plants is allowed when the plant is not placed on a pedestal, but on the contrary is planted in a tube that is placed in a flower pot. The soil that is contained in such a tube is thus continuous with the soil contained in the flower pot itself.

The mentioned type of flower tube is well-suited for various plants but there are however plants that cannot grow in such a flower tube because their root system is not strong enough for being able to attract the necessary nutrients and water to the plant when it is planted in a flower tube.

It is the object of the invention to indicate a soil-filled flower tube offering plants with weak root systems living conditions that correspond to those available had the plant been planted in a traditional flower pot.

A flower tube according to the invention differs from the prior art in that the soil in the flower tube is divided into at least two zones, each zone having its own physical and/or chemical properties.

With a flower tube according to the invention the possibility is achieved for creating optimum conditions of growth for plants with weak root systems. Especially there may be problems with plants such as Campanula isophylla, Begonia elatior, Pilea libanensis, Slumbergera, and Soleirolia soleirolii (Baby's Tears) that all have weak root systems that cannot ensure the plants sufficient water and nutrients when they are planted in traditional flower tubes.

In a preferred embodiment of a flower tube according to the invention the tube is divided into several zones, each zone consisting of soil that has been compacted to different densities. With this solution the possibility is achieved for producing for example hard zones and less hard zones that each individually has different properties with regard to permeability for roots and with regard to water conducting ability.

Each zone in a flower tube according to the invention can contain an adjusted amount of minerals and nutrients. In this way the plant, which is placed in the tube, can be given a supplement causing increased growth and vitality.

In a preferred embodiment, the zones extend longitudinally of the tube, and assume concentric forms, for example with a cylindrical zone in the centre of the tube and with an encircling tubular zone filling up the remaining part of the tube volume. With such a distribution of zones there may, in the tubular zone, be soil having a lower density than in the cylindrical zone. Hereby the advantage is achieved that the root systems of the plants can easily and effortlessly work their way down through the zone having low density in order to finally spread in the flower pot. The cylindrical zone, which has a higher density, has, because of its density, a capillary effect, which causes the zone to function as a sort of straw that conducts water up in the flower tube so that the plant has access to the required amount of water.

In an alternative embodiment, the zones can be formed in layers of individual thickness transversely of the longitudinal direction of the tube. With this embodiment deposits for minerals and nutrients may be built up that are released and assimilated by the plant over time.

The invention is described in the following with reference to the drawing which, without being intended to be limiting, shows a preferred embodiment of a flower tube with capillary effect according to the invention, in which:
Fig. 1 shows a flower tube mounted in a flower pot,
Fig. 2 shows a vertical section in a flower tube with soil divided into vertical, coaxial zones,
Fig. 3 shows a filled flower tube seen from above, and
Fig. 4 shows an alternative zone division.

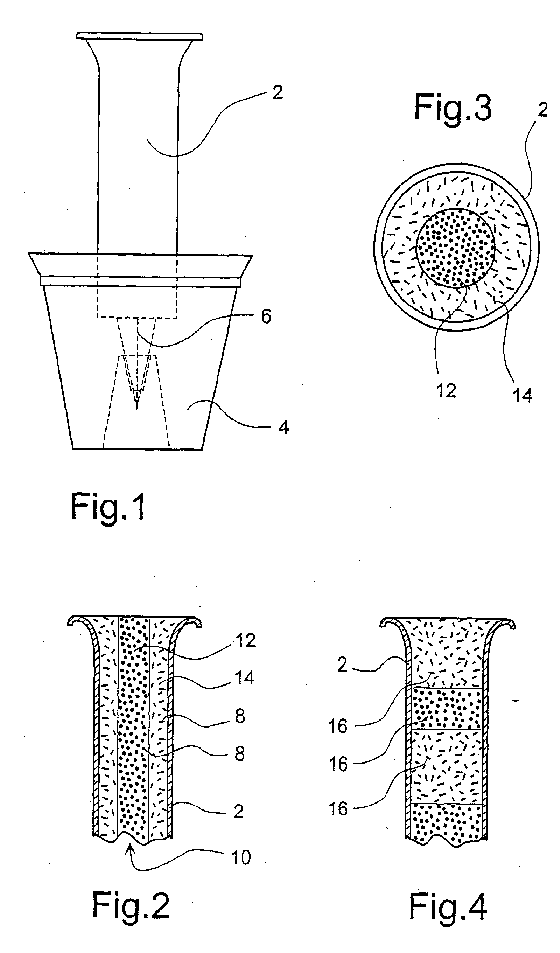

A flower tube 2 as shown in Fig. 1 is intended for mounting over or in a flower pot 4. As in this case, mounting can be with means 6 adapted for this, or the tube 2 can be placed in the soil 8 in the flower pot 4 with no mechanical engagement between the two items, 2, 4. A preferred aspect of the invention is seen in Fig. 2 and concerns a zone division consisting of two coaxial zones 10 that extend longitudinally of the flower tube 2 where there is soil 8 in the centre zone 12 which soil has a density that is higher than the density of the soil 8 in the surrounding zone 14. The soil 8 can, as mentioned elsewhere, also contain various minerals and nutrients in the respective zones 12, 14. In fig. 3 the tube 2 is seen with the coaxial zones 10 from above. The zone 12 in the centre is here illustrated as having a cylindrical shape, but it is obvious that the zone 12 can have any shape in its cross-section, if this is found to be attractive.

Fig. 4 shows a variant in which the zone division 16 is transverse of the longitudinal direction of the tube 2, this solution gives the possibility of embedding soil 8 with incorporated deposits of minerals and nutrients, if this is desirable. This zone division 16 can in principle be combined with the coaxial zone division 10 longitudinally of the flower tube 2 where this might be attractive.

## Claims

1. Flower tube of the type that is filled with a suitable material for growing ornamental plants and placed over a traditional flower pot where the flower pot is filled with the same suitable material, in the following called soil, **characterisedin that** the soil (8) in the flower tube (2) is divided into at least two zones (12, 14, 16), each zone (12, 14, 16) having its own physical and/or chemical properties.

2. Flower tube according to claim 1, **characterisedin that** that each zone (12, 14, 16) consists of soil (8) that has been compacted to different densities.

3. Flower tube according to the claims 1 and 2, **characterised in that** each zone (12, 14, 16) contains an adjusted amount of minerals and nutrients.

4. Flower tube according to the claims 1-3, **characterisedin that** the zones (10) extend longitudinally of the tube (2) and assume concentric forms.

5. Flower tube according to the claims 1-3, **characterisedin that** the zones (16) form layers of individual thickness transversely of the longitudinal direction of the tube (2).
